# EUROPÄISCHE PATENTSCHRIFT

(11) **EP 1 172 277 B1**
(45) Veröffentlichungstag und Bekanntmachung des Hinweises auf die Patenterteilung: **21.05.2008**
(21) Anmeldenummer: 01116946.3
(22) Anmeldetag: 11.07.2001
(51) Int. Cl.: B62B 5/00, B62B 3/06

(54) **Flurförderfahrzeug**
Industrial truck
Chariot de manutention

(30) Priorität: 12.07.2000 DE 10033801
(43) Veröffentlichungstag der Anmeldung: 16.01.2002
(73) Patentinhaber: OM Carrelli Elevatori S.p.A., 20020 Lainate (MI) (IT)
(72) Erfinder: Mariotti, Fabio, 42016 Reggio Emilia (IT)
(74) Vertreter: Geirhos, Johann

(56) Entgegenhaltungen:
- EP-A- 0 329 504
- EP-A- 0 919 404
- DE-A- 4 432 620
- DE-A- 19 538 223
- DE-A- 19 753 411
- DE-U- 29 918 833
- FR-A- 2 570 655

## Beschreibung

Die Erfindung betrifft ein Flurförderzeug, insbesondere Gabelhubwagen, mit einem Antriebsteil und einem Lastteil, wobei im Bereich des Antriebsteils zumindest ein lenkbares Antriebsrad vertikal starr am Flurförderzeug befestigt ist und mindestens eine Schwenkrolle angeordnet ist, die um eine vertikale Achse drehbar und vertikal bewegbar am Antriebsteil befestigt ist, und wobei im Bereich des Lastteils mindestens zwei Lastrollen angeordnet sind.

Derartige Flurförderzeuge sind beispielsweise als deichselgeführte Mitgängerfahrzeuge oder als Hubwagen mit einem Fahrerstand bzw. einem Fahrersitz bekannt. Der Antriebsteil stützt sich mit dem Antriebsrad, das vorzugsweise vertikal starr am Flurförderzeug befestigt ist, und zumindest einer Schwenkrolle, die vertikal bewegbar und drehbar am Antriebsteil gelagert ist, auf der Fahrbahn ab. Der Lastteil eines derartigen Flurförderzeugs ist mittels zweier Lastrollen auf dem Boden abgestützt. Hierbei sind Bauformen bekannt, bei denen das Antriebsrad seitlich im Abstand zur Fahrzeuglängsachse angeordnet ist und auf der gegenüberliegenden Seite eine von der Fahrzeuglängsachse beabstandete Schwenkrolle angeordnet ist. Neben derartigen Flurförderzeug mit einem Vierradfahrwerk sind ebenfalls Flurförderzeuge mit einem Fünfradfahrwerk bekannt, bei denen das Antriebsrad mittig am Antriebsteil befestigt ist und zwei Schwenkrollen an den Seiten des Antriebsteils beabstandet zur Fahrzeuglängsachse angeordnet sind. Durch die vertikale Bewegbarkeit der Schwenkrollen kann bei derartigen Flurförderzeugen vermieden werden, dass das Antriebsrad beispielsweise durch Bodenunebenheiten einen Teil der Aufstandskraft verliert.

Bei derartigen Flurförderzeugen mit vertikal bewegbaren Schwenkrollen ergibt sich jedoch bei bestimmten Betriebszuständen, beispielsweise während einer Kurvenfahrt, ein Zustand, dass das Flurförderzeug durch die vertikale Bewegbarkeit der Schwenkrollen eine hohe Seitenneigung und somit eine geringe Stabilität und Standfestigkeit aufweist.

Ein gattungsgemäßes Flurförderzeug ist aus der DE 197 53 412 A1 bekannt. Zur Erhöhung der Stabilität des Flurförderzeugs ist den Schwenkrollen jeweils ein kraftgetriebenes steuerbares Stellorgan zugeordnet, das die Aufstandskraft der Schwenkrolle in Abhängigkeit von einem Betriebsparameter des Flurförderzeugs steuert. Zur Verbesserung der Stabilität und Standfestigkeit wird hierbei in entsprechenden Betriebszuständen des Flurförderzeugs durch das Stellorgan die Aufstandskraft der Schwenkrollen erhöht. Das Stellorgan ist hierbei als Hydraulikzylinder ausgebildet, wobei zur Erhöhung der Aufstandskraft in entsprechenden Betriebszuständen der Hydraulikzylinder aktiv mit Hydraulikdruck beaufschlagt wird. Ein derartiges Flurförderzeug weist jedoch aufgrund der den Schwenkrollen zugeordneten kraftgetriebenen Stellorganen und deren Steuerung einen hohen Bauaufwand auf.

Der vorliegenden Erfindung liegt die Aufgabe zugrunde, ein Flurförderzeug der eingangs genannten Gattung zur Verfügung zu stellen, das mit geringem Bauaufwand eine hohe Stabilität und Standfestigkeit aufweist.

Diese Aufgabe wird erfindungsgemäß dadurch gelöst, dass die Aufstandskraft der Schwenkrolle von einer Feder vorgebbar ist und die Schwenkrolle mit einer Arretierungseinrichtung in Wirkverbindung steht, mittels der die Schwenkrolle in Abhängigkeit von zumindest einem Betriebsparameter des Flurförderzeugs in vertikaler Richtung festsetzbar ist, wobei die Schwenkrolle mit einem federbeaufschlagten Hydraulikzylinder in Wirkverbindung steht und der Hydraulikzylinder einen Federraum aufweist, in dem die Feder angeordnet ist, wobei die Arretierungseinrichtung zumindest ein Ventil aufweist, mittels dem das Ausströmen von Druckmittel aus dem Federraum des Hydraulikzylinders steuerbar ist.

Die Schwenkrolle wird durch eine Feder auf die Fahrbahn gedrückt, wobei mittels der Arretierungseinrichtung bei entsprechenden Betriebszuständen die Einfederung der Schwenkrolle unterbrochen und somit die Stabilität und Standfestigkeit des Flurförderzeugs erhöht wird. Durch einen federbeaufschlagten Hydraulikzylinder kann auf einfache Weise mit geringem Bauaufwand eine Feder-Dämpfer-Einrichtung für die Schwenkrolle gebildet werden, wobei mit einer als Ventil, das das Ausströmen von Druckmittel aus dem Federraum des Hydraulikzylinders steuert, ausgebildeten Arretierungseinrichtung auf einfache Weise die vertikale Bewegung der Schwenkrolle ermöglicht oder die Schwenkrolle in vertikaler Richtung hydraulisch blockiert werden kann. Erfindungsgemäß wird somit die vertikale Bewegbarkeit der Schwenkrolle in entsprechenden Betriebszuständen unterbunden, um die Stabilität des Flurförderzeugs zu erhöhen. Dadurch ergibt sich ein geringer Bauaufwand, da an der Schwenkrolle lediglich eine Arretierungseinrichtung erforderlich ist, die die Schwenkrolle in vertikaler Richtung festsetzt, wodurch auf einfache Weise in entsprechenden Betriebszuständen die Stabilität und Standfestigkeit des Flurförderzeugs erhöht werden kann.

Als Betriebsparameter zur Steuerung der vertikalen Bewegung der Schwenkrolle können unterschiedliche Parameter vorgesehen werden. Bei einer Kurvenfahrt weist ein Flurförderzeug mit vertikal bewegbaren Schwenkrollen durch die Einfederung der kurvenäußeren Schwenkrolle eine geringe Kippstabilität auf. Durch die Steuerung der Arretierungseinrichtung in Abhängigkeit von dem Lenkwinkel des Antriebsrades kann somit die Kippstabilität während der Kurvenfahrt auf einfache Weise erhöht werden. Die Seitenneigung des Flurförderzeugs kann ebenfalls zur Steuerung der Arretierungseinrichtung verwendet werden, wodurch während einer Kurvenfahrt eine hohe Kippstabilität des Flurförderzeugs erzielbar ist. Die Seitenneigung des Flurförderzeugs kann beispielsweise aus der vertikalen Position der Schwenkrollen bestimmt werden. Durch eine Steuerung der Arretierungseinrichtung in Abhängigkeit von der Fahrgeschwindigkeit des Flurförderzeugs kann bei hohen Fahrgeschwindigkeiten die Stabilität des Flurförderzeugs erhöht werden. Zudem kann die Beschleunigung oder Verzögerung des Flurförderzeugs als Betriebsparameter verwendet werden. Als Betriebparameter kann weiterhin die Hubhöhe der Last und/oder das Gewicht der aufgenommenen Last verwendet werden, wodurch bei großen Lasten und/oder hohen Hubhöhen durch eine Festsetzung des Schwenkrollen eine hohe Stabilität und Standfestigkeit des Flurförderzeugs erzielbar ist.

Sofern die Schwenkrolle durch die Arretierungseinrichtung festgesetzt ist und bei entsprechendem Betriebsparameter des Flurförderzeugs freigebbar ist, ergibt sich eine hohe Sicherheit des Flurförderzeugs.

Die Schwenkrolle kann mit einem Hydraulikzylinder und einer separaten Feder in Verbindung steht, um mittels der Feder die Aufstandskraft vorzugeben und mittels des Hydraulikzylinders die vertikale Bewegung der Schwenkrolle zu dämpfen und zu blockieren.

Sofern der Federraum des Hydraulikzylinders mittels einer Drosseleinrichtung mit einem Behälter in Verbindung steht, kann auf einfache Weise bei aus dem Federraum ausströmenden Druckmittel während der Einfederung eine Dämpfung der Schwenkrolle erzielt werden.

Zweckmäßigerweise ist das Ventil als entsperrbares Sperrventil ausgebildet. Mit einem entsperrbaren Sperrventil kann auf einfache Weise das Ausströmen von Druckmittel aus dem Hydraulikzylinder ermöglicht oder unterbrochen werden.

Besondere Vorteile ergeben sich, wenn das Ventil durch eine Feder in Richtung einer Sperrstellung und mittels einer Betätigungseinrichtung in Richtung einer Durchflussstellung beaufschlagbar ist. Das Ventil befindet sich somit im nichtangesteuerten Zustand in einer Sperrstellung, in der ein Ausströmen von Druckmittel aus dem Hydraulikzylinder verhindert ist und somit die Schwenkrolle festgesetzt ist. Dadurch ergibt sich eine hohe Sicherheit des Flurförderzeugs, da im nicht angesteuerten Zustand oder bei einem Ausfall des Ansteuersignals die Schwenkrollen blockiert sind und somit das Flurförderzeug eine hohe Stabilität und Standfestigkeit aufweist.

Das Ventil kann hydraulisch oder mechanisch angesteuert werden. Zweckmäßigerweise ist das Ventil elektrisch betätigbar, beispielsweise mittels eines Schaltmagneten.

Eine vorteilhafte Weiterbildung der Erfindung sieht vor, dass der Federraum des Hydraulikzylinders mittels eines in Richtung zum Federraum öffnenden Rückschlagventils mit dem Behälter in Verbindung steht. Durch die Verbindung des Federraums des Hydraulikzylinders mittels eines in Richtung zum Federraum öffnenden Rückschlagventils wird erzielt, dass die durch das Ventil festgesetzte Schwenkrolle weiter ausfedern kann, wodurch beispielsweise bei einer Kurvenfahrt und blockierten Schwenkrollen, die kurvenäußere Schwenkrolle Bodenunebenheiten ausgleichen kann.

Gemäß einer bevorzugten Ausführungsform der Erfindung ist eine elektronische Steuereinrichtung vorgesehen ist, die mit der Arretierungseinrichtung und einer Sensoreinrichtung zur Erfassung des Betriebsparameters des Flurförderzeugs in Wirkverbindung steht. Mit einer elektronischen Steuereinrichtung kann auf einfache Weise die Einfederung der Schwenkrolle in Abhängigkeit von bestimmten Betriebsparametern blockiert oder freigegeben werden.

Weitere Vorteile und Einzelheiten der Erfindung werden anhand des in den schematischen Figuren dargestellten Ausführungsbeispiels näher erläutert. Dabei zeigt
- Figur 1: ein erfindungsgemäßes Flurförderzeug,
- Figur 2: einen Antriebsteil eines erfindungsgemäßen Flurförderzeugs.

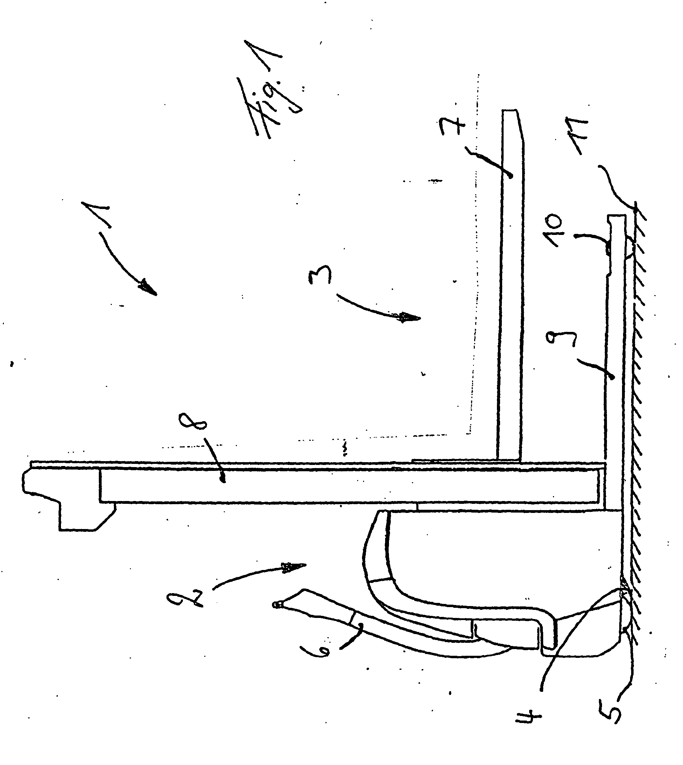

In der Figur 1 ist ein als deichselgeführter Hochhubwagen ausgebildetes Flurförderzeug 1 gezeigt, das einen Antriebsteil 2 und einen Lastteil 3 umfasst. Der Antriebsteil 2 weist bezüglich der Längsachse des Flurförderzeugs ein mittig angeordnetes Antriebsrad 4 und zwei seitlich angeordnete Schwenkrollen 5 auf. Das Antriebsrad 4 kann mittels einer Deichsel 6 gelenkt werden. Der Lastteil 3 umfasst Tragarme 7, die an einem Hubgerüst 8 auf- und abbewegbar angeordnet sind. Der Lastteil 3 umfasst weiterhin Radarme 9, in denen jeweils eine als Einfachrolle oder Tandemrolle ausgebildete Lastrolle 10 gelagert ist. Das Flurförderzeug 1 stützt sich somit mittels des Antriebsrades 4, den Schwenkrollen 5 und den Lastrollen 10 auf der Fahrbahn 11 ab.

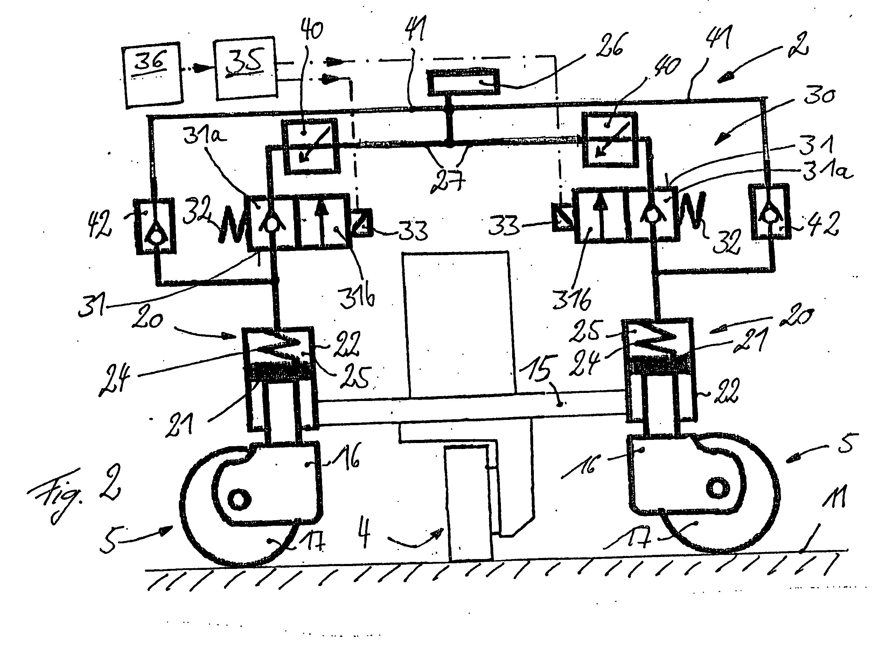

Die Figur 2 zeigt den schematischen Aufbau des Antriebsteils 2 des Flurförderzeugs 1 gemäß der Figur 1. Das lenkbare Antriebsrad 4 ist mittig zur Längsachse des Flurförderzeugs an einem Bauteil 15 des Antriebsteils 2 befestigt. Zu beiden Seiten des Antriebsrades 4 ist beabstandet von der Längsachse des Flurförderzeugs jeweils eine Schwenkrolle 5 am Antriebsteil 2, beispielsweise dem Bauteil 15, befestigt. Die Schwenkrolle 5 weist jeweils eine in einer Radaufhängung 16 drehbar gelagerte Rolle 17 auf, wobei die Radaufhängung 16 mit einem federbeaufschlagtem Hydraulikzylinder 20 in Wirkverbindung steht.

Der Hydraulikzylinder 20 weist einen Kolben 21 auf, der drehbar sowie vertikal verschiebbar in einem Zylinderrohr 22 des Hydraulikzylinders 20 gelagert ist. Das Zylinderrohr 22 ist hierbei am Antriebsteil 2, beispielsweise am Bauteil 15, befestigt. Der Kolben 21 und somit die Schwenkrolle 5 ist mittels einer in dem Zylinderrohr 22 angeordneten Feder 24 in Richtung der Fahrbahn 11 beaufschlagt. Die Feder 24 ist hierbei in einem Federraum 25 des Hydraulikzylinders 20 angeordnet, der gegenüber dem Zylinderrohr 22 abgedichtet ist.

Die vertikale Bewegung der Schwenkrolle 5 kann mittels einer Arretierungseinrichtung 30 gesteuert werden. Die Arretierungseinrichtung 30 weist jeweils ein als entsperrbares Sperrventil ausgebildetes Ventil 31 auf, das in einer den Federraum 25 des Hydraulikzylinders 20 mit einem Behälter 26 verbindenden Druckmittelleitung 27 angeordnet ist. Das Ventil 31 ist hierbei als Zweistellungsventil mit einer Sperrstellung 31a, in der die Verbindung des Federraums 25 mit dem Behälter 26 gesperrt ist, und einer Durchflussstellung 31 b ausgebildet, in der der Federraum 25 mit dem Behälter 26 in Verbindung steht. Das Ventil 31 ist in Richtung der Sperrstellung 31a von einer Feder 32 beaufschlagt und in Richtung der Durchflussstellung 31 b elektrisch aufsteuerbar, beispielsweise mittels eines als Schaltmagneten ausgebildeten Betätigungselements 33.

Die Betätigungselemente 33 der Ventile 31 stehen mit einer elektronischen Steuereinrichtung 35 in Wirkverbindung, die eingangsseitig mit einer Sensoreinrichtung 36 in Verbindung steht. Die Sensoreinrichtung 36 erfasst hierbei bestimmte Betriebsparameter des Flurförderzeugs, beispielsweise den Lenkwinkel des Antriebsrades, die Fahrgeschwindigkeit des Flurförderzeugs, die Hubhöhe der Last, das Gewicht der aufgenommenen Last oder die Seitenneigung des Flurförderzeugs.

In der Druckmittelleitung 27 ist jeweils eine Drosseleinrichtung 40 angeordnet, die bei aus dem Federraum 25 austretendem Druckmittel als Dämpfung wirkt.

In jeweils einer das Ventil 31 und die Drossel 40 umgehenden Umgehungsleitung 41, die an die Druckmittelleitung 27 angeschlossen ist, ist ein in Richtung zum Federraum 25 öffnendes Rückschlagventil 42 angeordnet. Durch diese Rückschlagventile 42 kann während einer Kurvenfahrt bei blockierten Schwenkrollen an der kurvenäußeren Schwenkrolle beispielsweise bei Bodenunebenheiten eine weiteres Ausfedern erzielt werden.

Die Wirkungsweise der oben beschriebenen Vorrichtung ist wie folgt: Durch die die Kolben 21 beaufschlagenden Federn 24 ist die Aufstandskraft der entsprechenden Stützrolle 5 vorgebeben. In der Neutralstellung befinden sich die Ventile 31 in der Sperrstellung 31a, wodurch die Kolben 21 hydraulisch blockiert sind und somit die Stützrollen 5 in vertikaler Richtung festgesetzt sind. Das Flurförderzeug befindet sich somit in einer Sicherheitsschaltung. An der Sensoreinrichtung 36 werden bestimmte Betriebsparameter erfasst, beispielsweise der Lenkwinkel des Antriebsrades 4, wobei die elektronische Steuereinrichtung 35 durch eine Ansteuerung der Betätigungselemente 33 die Ventile 31 in die Durchflussstellung 31b beaufschlagt, wenn unkritische Betriebszustände vorliegen. Die Federung der Stützrollen 5 ist hierbei freigegeben. Druckmittel kann somit aus dem Federraum 25 ausströmen, wodurch die Stützrollen 5 beispielsweise bei Bodenunebenheiten einfedern und sicherstellen, dass das Antriebsrad 4 Bodenkontakt aufweist. Durch die Drosseleinrichtungen 40 wird hierbei eine Dämpfung bei aus dem Federraum 25 beim Einfedern austretenden Druckmittel erzielt, wodurch Schwingungen vermieden werden können. Wird an der Sensoreinrichtung 36 ein kritischer Betriebszustand erfasst, beispielweise ein bezogen auf die Fahrgeschwindigkeit großer Lenkwinkel, werden durch die elektronische Steuereinrichtung 35 die Ansteuerung der Betätigungselemente 33 beendet und somit die Ventile 31 durch die Federn 32 in die Sperrstellung 31a beaufschlagt. Dadurch wird ein Ausströmen von Druckmittel aus dem Federraum 25 unterbunden und somit die Schwenkrollen 5 hydraulisch blockiert. Die bei einer Kurvenfahrt aus den Zentrifugalkräften resultierende Seitenneigung des Flurförderzeugs wird somit verringert bzw. unterbunden und die Zentrifugalkräfte über die kurvenäußere Schwenkrolle 5 auf die Fahrbahn 5 übertragen. Die Einfederung der Schwenkrollen 5 wird somit durch die Arretierungseinrichtung 30 in kritischen Betriebszuständen unterbunden, wodurch bei einer Kurvenfahrt mit geringem Bauaufwand eine hohe Kippstabilität des Flurförderzeugs erzielt werden kann.

## Patentansprüche

1. Flurförderzeug (1), insbesondere Gabelhubwagen, mit einem Antriebsteil (2) und einem Lastteil (3), wobei im Bereich des Antriebsteils zumindest ein lenkbares Antriebsrad (4) vertikal starr am Flurförderzeug befestigt und mindestens eine Schwenkrolle (5) angeordnet ist, die um eine vertikale Achse drehbar und vertikal bewegbar am Antriebsteil gelagert ist, wobei im Bereich des Lastteils mindestens zwei Lastrollen (10) angeordnet sind, und wobei die Aufstandskraft der Schwenkrolle (5) von einer Feder (24) vorgebbar ist, **dadurch gekennzeichnet, dass** die Schwenkrolle (5) mit einer Arretierungseinrichtung (30) in Wirkverbindung steht, mittels der die Schwenkrolle (5) in Abhängigkeit von zumindest einem Betriebsparameter des Flurförderzeugs (1) in vertikaler Richtung festsetzbar ist, wobei die Schwenkrolle (5) mit einem federbeaufschlagten Hydraulikzylinder (20) in Wirkverbindung steht und der Hydraulikzylinder (20) einen Federraum (25) aufweist, in dem die Feder (24) angeordnet ist, und wobei die Arretierungseinrichtung (30) zumindest ein Ventil (31) aufweist, mittels dem das Ausströmen von Druckmittel aus dem Federraum (25) des Hydraulikzylinders (20) steuerbar ist.

2. Flurförderzeug nach Anspruch 1, **dadurch gekennzeichnet, dass** als Betriebsparameter einer oder mehrere folgenden Parameter vorgesehen ist sind:
- Lenkwinkel des Antriebsrades (4),
- Fahrgeschwindigkeit des Flurförderzeugs (1),
- Beschleunigung oder Verzögerung des Flurförderzeugs (1),
- Hubhöhe der Last,
- Gewicht der aufgenommenen Last,
- Seitenneigung des Flurförderzeugs.

3. Flurförderzeug nach einem der Ansprüche 1 bis 2, **dadurch gekennzeichnet, dass** die Schwenkrolle (5) durch die Arretierungseinrichtung (30) festgesetzt ist und bei entsprechendem Betriebsparameter des Flurförderzeugs (1) freigebbar ist.

4. Flurförderzeug nach Anspruch 1 bis 3, **dadurch gekennzeichnet, dass** der Federraum (25) des Hydraulikzylinders (20) mittels einer Drosseleinrichtung (40) mit einem Behälter (26) in Verbindung steht.

5. Flurförderzeug nach einem der Ansprüche 1 bis 4, **dadurch gekennzeichnet, dass** das Ventil (31) als entsperrbares Sperrventil ausgebildet ist.

6. Flurförderzeug nach einem der Ansprüche 1 bis 5, **dadurch gekennzeichnet, dass** das Ventil (31) durch eine Feder (32) in Richtung einer Sperrstellung (31a) und mittels einer Betätigungseinrichtung in Richtung einer Durchflussstellung (31 b) beaufschlagbar ist.

7. Flurförderzeug nach einem der Ansprüche 1 bis 6, **dadurch gekennzeichnet, dass** das Ventil (31) elektrisch betätigbar ist.

8. Flurförderzeug nach einem der Ansprüche 1 bis 7, **dadurch gekennzeichnet, dass** der Federraum (25) des Hydraulikzylinders (20) mittels eines in Richtung zum Federraum (25) öffnenden Rückschlagventils (42) mit dem Behälter (26) in Verbindung steht.

9. Flurförderzeug nach einem der vorangegangenen Ansprüche, **dadurch gekennzeichnet, dass** eine elektronische Steuereinrichtung (35) vorgesehen ist, die mit der Arretierungseinrichtung (30) und einer Sensoreinrichtung (36) zur Erfassung des Betriebsparameters des Flurförderzeugs (1) in Wirkverbindung steht.

## Claims

1. Industrial truck (1), in particular fork-lift truck, with a drive part (2) and a load part (3), wherein, in the region of the drive part, at least one steerable drive wheel (4) is rigidly fastened vertically on the industrial truck and at least one pivot roller (5) is positioned, which is mounted so as to be rotatable about a vertical axis and vertically moveable on the drive part, wherein at least two load rollers (10) are positioned in the region of the load part and wherein the contact force of the pivot roller (5) can be predetermined by a spring (24), **characterised in that** the pivot roller (5) is in operative connection with a locking device (30), by means of which the pivot roller (5) can be fixed in the vertical direction as a function of at least one operating parameter of the industrial truck (1), the pivot roller (5) being in operative connection with a spring-loaded hydraulic cylinder (20) and the hydraulic cylinder (20) having a spring chamber (25), in which the spring (24) is positioned, and the locking device (30) having at least one valve (31), by means of which the outflow of pressure medium from the spring chamber (25) of the hydraulic cylinder (20) can be controlled.

2. Industrial truck according to claim 1, **characterised in that** one or more of the following parameters is/are provided as operating parameters:
- steering angle of the drive wheel (4),
- driving speed of the industrial truck (1),
- acceleration or deceleration of the industrial truck (1),
- lift height of the load,
- weight of the load received,
- lateral inclination of the industrial truck.

3. Industrial truck according to any one of claims 1 to 2, **characterised in that** the pivot roller (5) is fixed by the locking device (30) and can be released in the event of corresponding operating parameters of the industrial truck (1).

4. Industrial truck according to claim 1 to 3, **characterised in that** the spring chamber (25) of the hydraulic cylinder (20) is connected to a container (26) by means of a throttle device (40).

5. Industrial truck according to any one of claims 1 to 4, **characterised in that** the valve (31) is configured as an unlockable stop valve.

6. Industrial truck according to any one of claims 1 to 5, **characterised in that** the valve (31) can be loaded by a spring (32) in the direction of a locking position (31 a) and can be loaded in the direction of a through-flow position (31 b) by means of an actuating device.

7. Industrial truck according to any one of claims 1 to 6, **characterised in that** the valve (31) can be electrically actuated.

8. Industrial truck according to any one of claims 1 to 7, **characterised in that** the spring chamber (25) of the hydraulic cylinder (20) is connected to the container (26) by means of a check valve (42) which opens in the direction of the spring chamber (25).

9. Industrial truck according to any one of the preceding claims, **characterised in that** an electronic control device (35) is provided, which is in operative connection with the locking device (30) and a sensor device (36) to detect the operating parameter of the industrial truck (1).

## Revendications

1. Chariot élévateur (1), notamment chariot élévateur à fourche comportant une partie d'entraînement (2) et une partie de charge (3),
dans la région de la partie d'entraînement, il est prévu au moins une roue motrice (4) guidée, fixée verticalement de manière rigide au chariot et au moins un galet pivotant (5) tournant autour d'un axe vertical et monté mobile verticalement sur la partie d'entraînement,
dans la région de la partie de charge, il y a au moins deux galets de charge (10) et
la force d'appui des galets pivotants (5) est prédéfinie par un ressort (24),
**caractérisé en ce que**
le galet pivotant (5) coopère avec une installation de blocage (30) par laquelle le galet pivotant (5) est fixé dans la direction verticale selon au moins un paramètre de fonctionnement du chariot transporteur (1),
le galet pivotant (5) coopérant avec un vérin hydraulique (20) sollicité par un ressort et
le vérin hydraulique (20) comporte une chambre à ressort (25) logeant le ressort (24) et
le dispositif de blocage (30) comporte au moins une soupape (31) par laquelle se commande la sortie de l'agent de pression de la chambre à ressort (25) du vérin hydraulique (20).

2. Chariot élévateur selon la revendication 1,
**caractérisé en ce que**
le paramètre de fonctionnement est l'un ou plusieurs des paramètres suivants :
- angle de braquage de la roue motrice (4),
- vitesse de circulation du chariot élévateur (1),
- accélération ou décélération du chariot élévateur (1),
- hauteur de levage de la charge,
- poids de la charge reçue,
- inclinaison latérale du chariot élévateur.

3. Chariot élévateur selon l'une des revendications 1 et 2,
**caractérisé en ce que**
le galet pivotant (5) se bloque par une installation de blocage (30) et se libère pour un paramètre de fonctionnement déterminé du chariot élévateur (1).

4. Chariot élévateur selon l'une des revendications 1 à 3,
**caractérisé en ce que**
la chambre à ressort (25) du vérin hydraulique (20) est reliée à un réservoir (26) par une installation d'étranglement (40).

5. Chariot élévateur selon l'une des revendications 1 à 4,
**caractérisé en ce que**
la soupape (31) est une soupape d'arrêt, déverrouillable.

6. Chariot élévateur selon l'une des revendications 1 à 5,
**caractérisé en ce que**
la soupape (31) est sollicitée par un ressort (32) en direction de sa position de blocage (31a) et par une installation d'actionnement dans la direction de sa position de passage (31b).

7. Chariot élévateur selon l'une des revendications 1 à 6,
**caractérisé en ce que**
la soupape (31) est à commande électrique.

8. Chariot élévateur selon l'une des revendications 1 à 7,
**caractérisé en ce que**
la chambre à ressort du vérin hydraulique (20) communique avec le réservoir (26) par l'intermédiaire d'un clapet anti-retour (42) s'ouvrant en direction de la chambre à ressort (25).

9. Chariot élévateur selon l'une des revendications précédentes,
**caractérisé par**
une installation de commande électronique (35) coopérant avec l'installation de blocage (30) et avec une installation de capteur (36) pour saisir le paramètre de fonctionnement du chariot élévateur (1).
